# EUROPÄISCHE PATENTSCHRIFT

(11) **EP 2 556 270 B1**
(45) Veröffentlichungstag und Bekanntmachung des Hinweises auf die Patenterteilung: **04.06.2014**
(21) Anmeldenummer: 11713255.5
(22) Anmeldetag: 06.04.2011
(51) Int. Cl.: F16H 1/22

(54) **Leistungsgetriebe**
Power transmission
Transmission de puissance

(30) Priorität: 07.04.2010 AT 5562010
(43) Veröffentlichungstag der Anmeldung: 13.02.2013
(73) Patentinhaber: Eisenbeiss GmbH, 4470 Enns (AT)
(72) Erfinder: STROSS, Wolfgang, A-4470 Enns (AT); LANG, Peter, A-4470 Enns (AT)
(74) Vertreter: KLIMENT & HENHAPEL
(86) Internationale Anmeldenummer: PCT/EP2011/055339
(87) Internationale Veröffentlichungsnummer: WO 2011/124603

(56) Entgegenhaltungen:
- CN-A- 101 435 488
- GB-A- 886 762
- US-A- 1 759 689

## Beschreibung

Die Erfindung betrifft ein Leistungsgetriebe, insbesondere ein Reduktionsgetriebe, mit einer Antriebswelle, einer Ritzelwelle, sowie zumindest zwei Abtriebswellen, wobei die Antriebswelle mit der Ritzelwelle über zumindest eine Stirnradstufe verbunden ist, und die Ritzelwelle mit den zumindest zwei Abtriebswellen über eine Verteilstufe verbunden ist, bei der zumindest zwei schrägverzahnte Ritzel, die auf der gemeinsamen Ritzelwelle angeordnet sind, jeweils mit einem Zahnrad der zumindest zwei Abtriebswellen kämmen, auf der Abtriebsritzel für einen nachfolgenden Zahnkranz angeordnet sind, gemäß dem Oberbegriff von Anspruch 1.

Leistungsgetriebe dieser Art sind in unterschiedlichen Ausführungen bekannt, um bei Antrieben mit hoher Leistung und hohen Drehmomenten eine Leistungsverzweigung auf den nachfolgenden Zahnkranz zu bewirken. Anwendungen solcher Leistungsgetriebe finden sich etwa in Zementmühlen, Drehrohröfen, Zuckerrohrpressen, oder anderen Antrieben mit Ritzel-Zahnkränzen.

Bei bekannten Leistungsgetrieben ergeben sich ungünstige Verhältnisse für die zumindest eine Stirnradstufe, die der Verteilstufe vorgelagert ist. Die Summe der Axialkräfte auf der Antriebswelle der Stirnradstufe muss Null sein, damit eine gleichmäßige Lastaufteilung stattfinden kann. Bei unterschiedlichen Schrägungswinkeln der schrägverzahnten Ritzel der Verteilstufe wird jedoch eine Axialkraft auf der Ritzelwelle erzeugt. Dadurch ergeben sich bei den Verzahnungen dieser Ritzel auch unterschiedliche Profilverschiebungen. Die technischen Gestaltungsmöglichkeiten sind dabei gering, wodurch die Schrägungswinkel der Verteilstufe nur geringfügig variieren dürfen. Aufgrund der resultierenden Unterschiede in der Axialkraft kann daher für die Stirnradstufe keine Schrägverzahnung (bei gleichen Schrägungswinkeln der Verteilstufe) gewählt werden, oder nur ein sehr begrenzter Schrägungswinkel. Des Weiteren kann bei bekannten Lösungen dieser Art für die üblicherweise hohen Leistungen und Umfangsgeschwindigkeiten keine ausreichende Überdeckung erreicht werden.

Daher wurde auch vorgeschlagen, bereits in der zumindest einen Stirnradstufe eine Leistungsverteilung durchzuführen, um in allen Verzahnungen eine ausreichende Überdeckung zu erzielen. Dabei werden auf der Antriebswelle zumindest zwei schrägverzahnte Zahnräder angeordnet, die mit entsprechenden Zahnrädern der Ritzelwelle kämmen. Daraus ergibt sich aber der Nachteil, dass einerseits eine größere Anzahl an Verzahnungsteilen und Lager benötigt wird, und andererseits die Antriebswelle des Getriebes axial beweglich bleiben muss, um eine exakte Leistungsverteilung zu gewährleisten. Von außen auf die Antriebswelle wirkende Axialkräfte, die etwa über die Kupplung zwischen Antriebsmotor und Getriebe eingebracht werden, verändern die Leistungsverteilung, wodurch sich eine höhere Belastung eines Leistungsstranges einstellt, und die Lebensdauer des Getriebes und des Zahnkranzes reduziert wird. Des Weiteren wird die Abdichtung des Getriebes aufwändiger, und es müssen zusätzliche Anbauten vorgesehen werden, um den axialen Verschiebeweg aufnehmen bzw. zulassen zu können.

Getriebe sind aus der GB 886 762, sowie der CN 101 435 488 bekannt. Weitere Getriebe wurden etwa in der gattungsgemäßen US 1 759 689 beschrieben.

Es ist daher das Ziel der Erfindung, diese Nachteile zu vermeiden und bei einem Leistungsgetriebe der gattungsgemäßen Art größere Axialkraftunterschiede in der Verteilstufe zu ermöglichen, und insbesondere bei hohen Leistungen und Umfangsgeschwindigkeiten eine Optimierung der vorgelagerten Stirnradstufe zu erreichen. Insbesondere sollen die Laufruhe des gattungsgemäßen Leistungsgetriebes und dessen Lebensdauer erhöht werden.

Diese Ziele werden durch die Merkmale von Anspruch 1 erreicht. Anspruch 1 bezieht sich hierbei auf ein Leistungsgetriebe, insbesondere ein Reduktionsgetriebe, mit einer Antriebswelle, einer Ritzelwelle, sowie zumindest zwei Abtriebswellen, wobei die Antriebswelle mit der Ritzelwelle über zumindest eine Stirnradstufe verbunden ist, und die Ritzelwelle mit den zumindest zwei Abtriebswellen über eine Verteilstufe verbunden ist, bei der zumindest zwei schrägverzahnte Ritzel, die auf der gemeinsamen Ritzelwelle angeordnet sind, jeweils mit einem Zahnrad der zumindest zwei Abtriebswellen kämmen, auf denen Abtriebsritzel für einen nachfolgenden Zahnkranz angeordnet sind. Erfindungsgemäß ist hierbei vorgesehen, dass die zumindest zwei Ritzel der Ritzelwelle einen unterschiedlichen Modul und die zumindest zwei Abtriebswellen einen unterschiedlichen Achsabstand zur Ritzelwelle aufweisen. Der Modul ist ein wichtiges Verzahnungsmaß für Zahnräder und ist definiert als der Quotient aus dem Teilkreis-Durchmesser und der Zähnezahl des Zahnrades, bzw. aus der Teilung p des Zahnrades und der Kreiszahl n. Die unterschiedliche Wahl des Moduls der zumindest zwei Ritzel der Ritzelwelle, und somit eine asymmetrische Ausführung der Verteilstufe, erscheint zunächst widersinnig, ermöglicht jedoch gemäß praktischer Erfahrung größere Freiheit in der Wahl des Schrägungswinkels und der Profilverschiebung. Insbesondere kann ein größerer Schrägungswinkel in der vorgelagerten Stirnradstufe gewählt werden. Des Weiteren zeigt sich, dass ergänzend zur unterschiedlichen Wahl des Moduls auch der Achsabstand der nachfolgenden Abtriebswellen angepasst werden muss.

Die Erfindung wird im Folgenden anhand eines Ausführungsbeispiels mithilfe der beiliegenden Zeichnungen näher erläutert. Es zeigen hierbei die
Fig. 1a ein Leistungsgetriebe gemäß dem bekannten Stand der Technik von der Seite gesehen,
Fig. 1b einen Schnitt A-B durch das Leistungsgetriebe gemäß Fig. 1a,
Fig. 2a ein weiteres Leistungsgetriebe gemäß dem bekannten Stand der Technik von der Seite gesehen,
Fig. 2b einen Schnitt A-B durch das Leistungsgetriebe gemäß Fig. 2a,
Fig. 3 ein erfindungsgemäßes Leistungsgetriebe von der Seite gesehen, und die
Fig. 4 einen Schnitt A-B durch das Leistungsgetriebe gemäß Fig. 3.

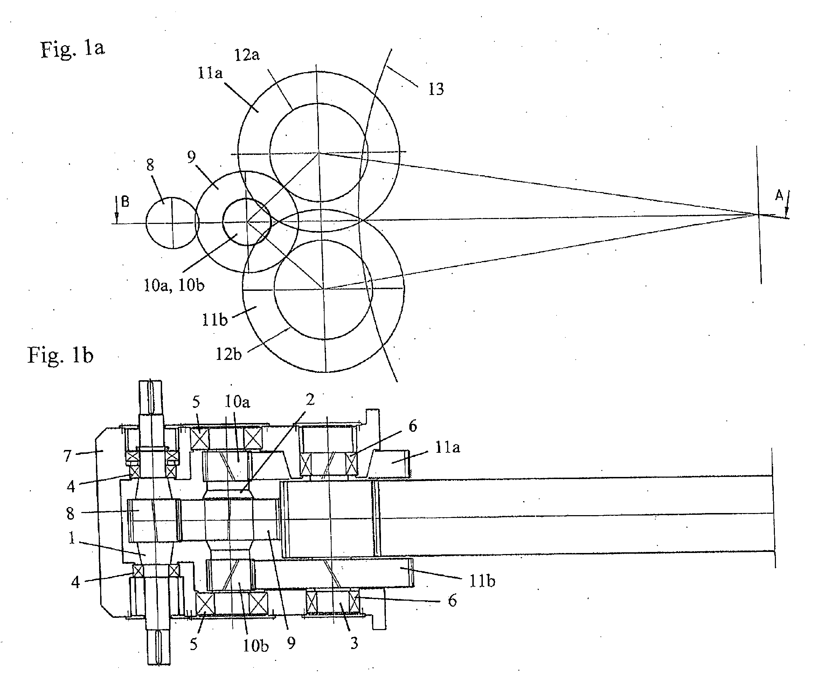

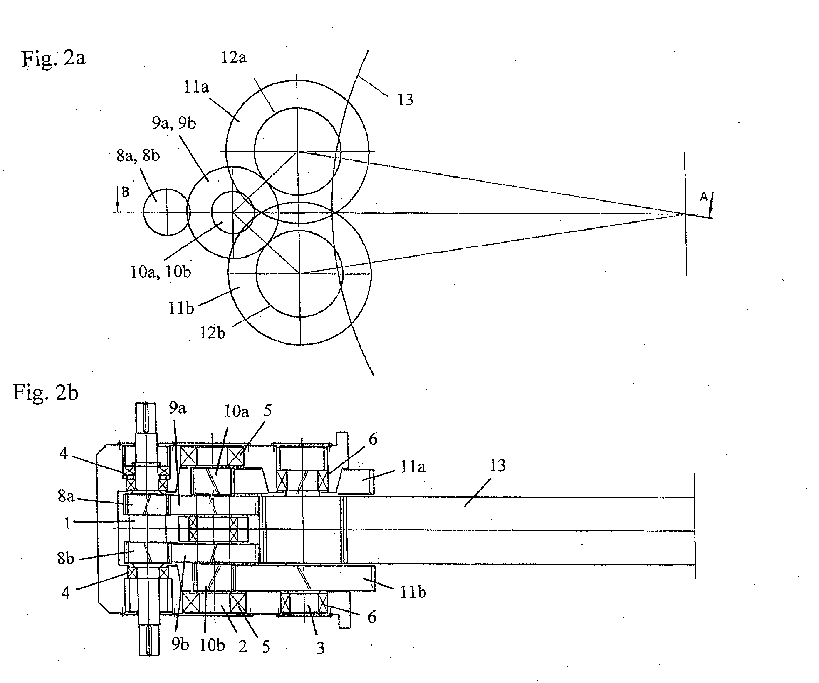

Zur Erläuterung des bekannten Stands der Technik wird zunächst auf die Figuren 1 und 2 eingegangen. In der Fig. 1a und 1b ist ein herkömmliches Leistungsgetriebe dargestellt, das insbesondere eine Antriebswelle 1, eine Ritzelwelle 2, sowie zwei Abtriebswellen 3 umfasst. Die Antriebswelle 1 ist in Antriebswellen-Lager 4 in axialfester Position gehalten, die Ritzelwelle 2 ist in Ritzelwellen-Lager 5 schwimmend axial beweglich gehalten, und die Abtriebswellen 3 sind in Fest- bzw. Loslager 6 gehalten. Die Abtriebswellen 3 liegen in den Ausführungen gemäß der Fig. 1 und 2 übereinander, sodass sie in den Fig. 1 und 2 auf derselben Achse zu liegen scheinen. Die genannten Komponenten sind in einem Gehäuse 7 untergebracht. Über einen Antrieb (in den Fig. 1 bis 4 nicht ersichtlich) wird die Antriebswelle 1 in Drehung versetzt.

Die Antriebswelle 1 trägt gemäß der gezeigten Ausführungsform ein Antriebswellen-Zahnrad 8, das als Stirnrad ausgebildet ist und mit einem Ritzelwellen-Zahnrad 9 kämmt. Diese Anordnung bildet die Stirnradstufe, bei der in herkömmlicher Weise Geradverzahnungen vorgesehen sind, oder Schrägverzahnungen mit sehr begrenzten Schrägungswinkeln, wie eingangs erläutert wurde. Das Ritzelwellen-Zahnrad 9 ist auf der Ritzelwelle 2 angeordnet, auf der sich auch die beiden Ritzel 10a, 10b befinden. Die Ritzel 10a, 10b weisen jeweils eine Schrägverzahnung auf, und kämmen mit entsprechenden Abtriebswellen-Zahnrädern 11a, 11b. Auf den Abtriebswellen 3 sind des Weiteren jeweils ein Abtriebsritzel 12a, 12b angeordnet, die einen nachfolgenden Zahnkranz 13 antreiben. Diese Anordnung bildet die Verteilstufe. Der Zahnkranz 13 verfügt im Vergleich zu den vorgelagerten Getriebeteilen über die größte Zähneanzahl, und bewegt sich daher mit der kleinsten Winkelgeschwindigkeit.

Wie bereits eingangs ausgeführt wurde, ergeben sich bei bekannten Leistungsgetrieben ungünstige Verhältnisse für die Stirnradstufe, die der Verteilstufe vorgelagert ist. Bei unterschiedlichen Schrägungswinkeln der schrägverzahnten Ritzel 10a, 10b der Verteilstufe wird eine Axialkraft auf der Ritzelwelle 2 erzeugt. Dadurch ergeben sich bei den Verzahnungen dieser Ritzel 10a, 10b auch unterschiedliche Profilverschiebungen. Die technischen Gestaltungsmöglichkeiten sind dabei wie erwähnt gering, insbesondere dürfen die Schrägungswinkel der Verteilstufe nur geringfügig variieren. Aufgrund der resultierenden Unterschiede in der Axialkraft kann daher für die Stirnradstufe keine Schrägverzahnung gewählt werden, oder nur ein sehr begrenzter Schrägungswinkel.

Bei einer alternativen Ausführung wird daher bereits in der Stirnradstufe eine Leistungsverteilung durchgeführt, wie in den Fig. 2a und 2b dargestellt ist, die sich ebenfalls auf den bekannten Stand der Technik beziehen. Dabei werden auf der Antriebswelle 1 zumindest zwei schrägverzahnte Antriebswellen-Zahnräder 8a, 8b angeordnet, die mit entsprechenden Ritzelwellen-Zahnrädern 9a, 9b der Ritzelwelle 2 kämmen. Daraus ergibt sich aber der Nachteil, dass einerseits eine größere Anzahl an Verzahnungsteilen und Lager benötigt wird, und andererseits die Antriebswelle 1 des Getriebes axial beweglich bleiben muss, um eine exakte Leistungsverteilung zu gewährleisten. Die Nachteile einer solchen Anordnung wurden bereits eingangs angeführt.

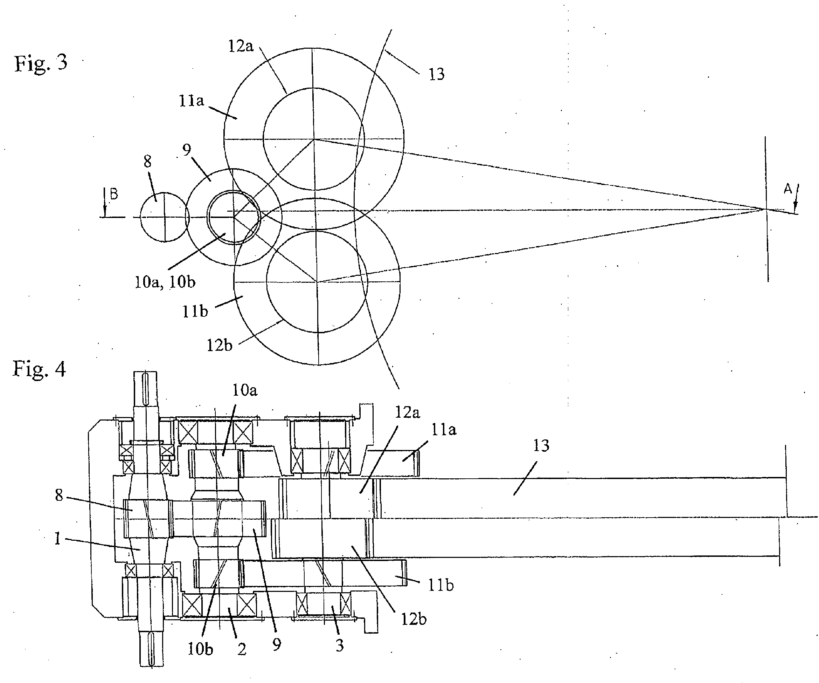

Eine erfindungsgemäße Ausführungsform eines Leistungsgetriebes ist in den Fig. 3 und 4 dargestellt. Die Anordnung ist dabei grundsätzlich mit jener der Fig. 1 vergleichbar, insbesondere trägt die Antriebswelle 1 ein Antriebswellen-Zahnrad 8, das als Stirnrad ausgebildet ist und mit einem Ritzelwellen-Zahnrad 9 kämmt. Diese Anordnung bildet die Stirnradstufe. Das Ritzelwellen-Zahnrad 9 ist auf der Ritzelwelle 2 angeordnet, auf der sich wiederum die beiden Ritzel 10a, 10b befinden. Die Ritzel 10a, 10b weisen jeweils eine Schrägverzahnung auf, und kämmen mit entsprechenden Abtriebswellen-Zahnrädern 11a, 11b. Auf den Abtriebswellen 3 sind wiederum die Abtriebsritzel 12a, 12b angeordnet, die einen nachfolgenden Zahnkranz 13 antreiben. Diese Anordnung bildet die Verteilstufe.

Erfindungsgemäß weisen allerdings nun die beiden Ritzel 10a, 10b der Ritzelwelle 2, sowie in entsprechender Weise die beiden Abtriebswellen-Zahnräder 11a, 11b, einen unterschiedlichen Modul auf. Des Weiteren wurde der Achsabstand der Abtriebswellen 3 zur Ritzelwelle 2 unterschiedlich gewählt (siehe Fig. 4). Die unterschiedliche Wahl des Moduls der beiden Ritzel 10a, 10b, sowie der Achsabstände der beiden Abtriebswellen 3 zur Ritzelwelle 2 ermöglicht nun überraschender Weise größere Freiheit in der Wahl des Schrägungswinkels und der Profilverschiebung der beiden Ritzel 10a, 10b. Insbesondere kann auch ein größerer Schrägungswinkel in der vorgelagerten Stirnradstufe gewählt werden, nämlich beim Antriebswellen-Zahnrad 8 und dem Ritzelwellen-Zahnrad 9, wo in herkömmlicher Weise Geradverzahnungen vorgesehen sind, oder Schrägverzahnungen mit sehr begrenzten Schrägungswinkeln. Aufgrund der höheren Schrägungswinkel lässt sich die Verzahnung wie in der DIN 3992, Seite 7, empfohlen optimieren, insbesondere kann die Gesamtüberdeckung auf einen Wert über 2,2 (Empfehlung Niemann) vergrößert werden. Insbesondere bei hohen Leistungen und Umfangsgeschwindigkeiten ist über eine solche Optimierung der Stirnradstufe eine erhöhte Laufruhe und Lebensdauer des Leistungsgetriebes erreichbar.

## Patentansprüche

1. Leistungsgetriebe, insbesondere Reduktionsgetriebe, mit einer Antriebswelle (1), einer Ritzelwelle (2), sowie zumindest zwei Abtriebswellen (3), wobei die Antriebswelle (1) mit der Ritzelwelle (2) über zumindest eine Stirnradstufe verbunden ist, und die Ritzelwelle (2) mit den zumindest zwei Abtriebswellen (3) über eine Verteilstufe verbunden ist, bei der zumindest zwei schrägverzahnte Ritzel (10a, 10b), die auf der gemeinsamen Ritzelwelle (2) angeordnet sind, jeweils mit einem Zahnrad (11a, 11b) der zumindest zwei Abtriebswellen (3) kämmen, auf denen Abtriebsritzel (12a, 12b) für einen nachfolgenden Zahnkranz (13) angeordnet sind, **dadurch gekennzeichnet, dass** die zumindest zwei Ritzel (10a, 10b) der Ritzelwelle (2) einen unterschiedlichen Modul und die zumindest zwei Abtriebswellen (3) einen unterschiedlichen Achsabstand zur Ritzelwelle (2) aufweisen.

## Claims

1. A power transmission, especially a reduction gear, comprising a drive shaft (1), a pinion shaft (2), and at least two output shafts (3), wherein the drive shaft (1) is connected to the pinion shaft (2) via at least one spur gear stage, and the pinion shaft (2) is connected to the at least two outputs shafts (3) via a distribution stage, in which at least two pinions (10a, 10b), which comprise helical teeth and are arranged on the common pinion shaft (2), respectively mesh with one gearwheel (11a, 11b) of the at least two output shafts (3), on which output pinions (12a, 12b) for a subsequent sprocket (13) are arranged, **characterized in that** the at least two pinions (10a, 10b) of the pinion shaft (2) have a different modulus and the at least two output shafts (3) have a different axial distance from the pinion shaft (2).

## Revendications

1. Transmission de puissance, en particulier réducteur, avec un arbre d'entraînement (1), un arbre de pignon (2) et au moins deux arbres de sortie (3), dans lequel l'arbre d'entraînement (1) est relié à l'arbre de pignon (2) par au moins un étage de roues droites, et l'arbre de pignon (2) est relié aux au moins deux arbres de sortie (3) par un étage de distribution dans lequel au moins deux pignons à denture oblique (10a, 10b), disposés sur l'arbre de pignon (2) commun, engrènent chacun avec une roue dentée (11a, 11b) des au moins deux arbres de sortie (3) sur lesquels des pignons de sortie (12a, 12b) sont disposés pour une couronne dentée (13) qui leur fait suite, **caractérisé en ce que** les au moins deux pignons (10a, 10b) de l'arbre de pignon (2) ont un module différent et les au moins deux arbres de sortie (3) ont une distance entre axes différente par rapport à l'arbre de pignon (2).
